(19) **Europäisches Patentamt / European Patent Office / Office européen des brevets**

(11) **EP 3 242 181 B1**

(12) **FASCICULE DE BREVET EUROPEEN**

(45) Date de publication et mention
de la délivrance du brevet:
**27.06.2018   Bulletin 2018/26**

(51) Int Cl.:
***G05D 1/08*** *(2006.01)*    *B64C 27/28* *(2006.01)*

(21) Numéro de dépôt: **17175700.8**

(22) Date de dépôt: **26.10.2012**

(54) **PROCEDE DE PILOTAGE ASSISTE D'UN AERONEF A VOILURE TOURNANTE COMPRENANT AU MOINS UNE HELICE PROPULSIVE, DISPOSITIF DE PILOTAGE ASSISTE ET AERONEF**

HILFSSTEUERUNGSVERFAHREN EINES DREHFLÜGELFLUGZEUGS, DAS MINDESTENS EINE DRUCKSCHRAUBE UMFASST, HILFSSTEUERUNGSVORRICHTUNG UND LUFTFAHRZEUG

METHOD OF ASSISTED PILOTING OF A ROTARY WING AIRCRAFT HAVING AT LEAST ONE PROPULSION PROPELLER, AN ASSISTED PILOTING DEVICE, AND AN AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **23.11.2011   FR 1103561**

(43) Date de publication de la demande:
**08.11.2017   Bulletin 2017/45**

(62) Numéro(s) de document de la (des) demande(s)
initiale(s) en application de l'article 76 CBE:
**12007385.3 / 2 597 035**

(73) Titulaire: **Airbus Helicopters**
**13725 Marignane Cedex (FR)**

(72) Inventeurs:
 • **SALESSE-LAVERGNE, Marc**
  **13190 ALLAUCH (FR)**
 • **QUEIRAS, Nicolas**
  **13170 LES PENNES MIRABEAU (FR)**
 • **EGLIN, Paul**
  **13830 ROQUEFORT LA BEDOULE (FR)**

(74) Mandataire: **GPI & Associés**
 **EuroParc de Pichaury**
 **Bâtiment B2 - 1er Etage**
 **1330, rue Guillibert de la Lauzière**
 **13856 Aix-en-Provence Cedex 3 (FR)**

(56) Documents cités:
 **US-A1- 2008 237 392**

**Description**

La présente invention concerne un procédé de pilotage assisté d'un aéronef à voilure tournante comprenant au moins une hélice propulsive, un dispositif de pilotage assisté et un aéronef.

Parmi les aéronefs, on connaît notamment les giravions pourvus d'une voilure tournante. De plus, certains giravions sont en outre munis d'un groupe propulsif additionnel.

Un aéronef à voilure tournante muni d'un groupe propulsif additionnel, ce groupe propulsif ayant au moins une hélice propulsive, est dénommé « aéronef hybride » par commodité par la suite.

Cet aéronef hybride peut comprendre :

- un moyen de commande de la poussée générée par le groupe propulsif,

- un moyen de commande collective du pas collectif des pales de la voilure tournante, et

- un moyen de commande cyclique du pas cyclique des pales de la voilure tournante.

Dès lors, on constate que les commandes de vol sont redondées.

En effet, pour contrôler l'accélération longitudinale de l'aéronef hybride, un pilote peut utiliser le moyen de commande de la poussée, et/ ou à l'instar d'un hélicoptère classique le moyen de commande cyclique.

De même, pour contrôler l'accélération verticale de l'aéronef hybride afin de contrôler la montée ou la descente de l'aéronef hybride, un pilote peut utiliser à l'instar d'un hélicoptère classique le moyen de commande collective sans changer l'assiette de l'aéronef hybride, et/ou peut par exemple d'une part changer l'assiette longitudinale de l'aéronef à l'aide du moyen de commande cyclique et d'autre part utiliser le moyen de commande de la poussée.

On comprend qu'une multitude de combinaisons de commande sont envisageables pour piloter un aéronef hybride.

Il peut donc être utile de prévoir un procédé et un dispositif allégeant la charge de travail du pilote en l'aidant lors de manoeuvres réalisées en pilotant la voilure tournante et le groupe propulsif.

On note que l'état de la technique inclut le document US 2008/0237392 présentant un aéronef pourvu d'une voilure tournante, d'une aile fixe et d'une hélice propulsive.

Un système de contrôle de l'aéronef permet à une personne de sélectionner un biais de contrôle pour atteindre un objectif opérationnel.

Plus précisément, l'aéronef comprend un module de contrôle vertical et longitudinal de l'aéronef recevant des données d'entrée relatives à des commandes de changement d'un angle de tangage et d'une vitesse verticale.

Ces données d'entrée sont filtrées puis subissent un traitement avant d'être transmises à un module d'inversion, le module d'inversion déterminant les changements à apporter à des moyens de commande de l'aéronef.

La présente invention a alors pour objet de proposer un procédé alternatif de pilotage assisté d'un aéronef hybride pour alléger la charge de travail d'un pilote de cet aéronef hybride.

L'invention vise un procédé de pilotage assisté d'un aéronef muni d'une voilure tournante et d'un groupe propulsif comprenant au moins une hélice propulsive, chaque hélice comprenant une pluralité de premières pales, la voilure tournante comprenant au moins un rotor muni d'une pluralité de deuxièmes pales.

Selon ce procédé, on traduit un ordre du pilote de l'aéronef donné pour requérir un déplacement selon une direction en une consigne d'accélération selon cette direction, puis on transforme cette consigne d'accélération par des lois prédéterminées en :

- au moins une consigne de tenue d'assiette longitudinale transmise à un premier système automatique de tenue d'assiette longitudinale contrôlant un pas cyclique longitudinal des deuxièmes pales de la voilure tournante pour respecter ladite consigne de tenue d'assiette longitudinale, et

- une première consigne de tenue de facteur de charge dans une direction longitudinale de l'aéronef parallèle à un axe de roulis de l'aéronef transmise à un deuxième système automatique de tenue dudit facteur de charge contrôlant un pas collectif des premières pales du groupe propulsif pour respecter ladite première consigne.

Dès lors des boucles de régulation utilisent la consigne de tenue d'assiette longitudinale et la première consigne pour le contrôle de l'aéronef.

Il est à noter que l'on entend par « assiette longitudinale » l'angle de tangage de l'aéronef.

Par suite, le pilote peut se contenter de fournir un ordre pour requérir le déplacement de l'aéronef selon une direction longitudinale ou verticale, le procédé permettant le contrôle automatique de l'aéronef en conséquence.

La charge de travail du pilote est alors allégée.

Il est à noter que l'on entend par direction longitudinale une direction parallèle à la direction longitudinale selon laquelle s'étend l'aéronef et assimilable à l'axe de roulis de l'aéronef, et par direction verticale une direction parallèle à la pesanteur.

Le procédé peut de plus comporter une ou plusieurs des caractéristiques additionnelles qui suivent.

Selon une première réalisation, lorsque l'ordre est un ordre de déplacement selon une direction longitudinale parallèle à un axe de roulis de l'aéronef, on traduit cet ordre de déplacement selon une direction longitudinale en une consigne d'accélération longitudinale, puis on transforme cette consigne d'accélération longitudinale par des lois prédéterminés uniquement en une consigne de tenue d'assiette longitudinale transmise à un premier système automatique de tenue d'assiette longitudinale contrôlant un pas cyclique longitudinale des deuxièmes pales et en une première consigne de tenue de facteur de charge transmise à un deuxième système automatique de tenue de facteur de charge contrôlant un pas collectif des premières pales.

La consigne de tenue d'assiette longitudinale peut être déterminée par la première loi de contrôle longitudinal suivante :

$$\theta^* = (180/\mathrm{Pi})\bullet[(-a)\bullet(\gamma_x^*/g) - k]/(a+b)$$

où « θ* » représente la consigne de tenue d'assiette longitudinale exprimée en degrés, « Pi » représente le nombre $\pi$, « $\gamma_x^*$ » représente la consigne d'accélération longitudinale, « g » représente l'accélération de la pesanteur, « • » représente le signe de la multiplication, « / » représente le signe de la division, « a » représente une première constante longitudinale, « b » représente une deuxième constante longitudinale, « k » représente une troisième constante longitudinale,

Par ailleurs, la première consigne de tenue de facteur de charge peut être déterminée par la deuxième loi de contrôle longitudinal suivante :

$$Nx^* = [b\bullet(\gamma_x^*/g) - k]/(a+b)$$

où « Nx* » représente la première consigne de tenue de facteur de charge, « $\gamma_x^*$ » représente la consigne d'accélération longitudinale, « g » représente l'accélération de la pesanteur, « • » représente le signe de la multiplication, « / » représente le signe de la division, « a » représente une première constante longitudinale, « b » représente une deuxième constante longitudinale, « k » représente une troisième constante longitudinale.

On note que la première consigne de tenue d'assiette longitudinale peut être modifiée par incrémentation ou décrémentation par un organe de réglage d'assiette, l'organe de réglage d'assiette pouvant être un organe de commande impulsionnelle monté sur une poignée de commande cyclique de l'aéronef.

Selon une première variante du premier mode de réalisation, on considère que la troisième constante longitudinale est égale à zéro pour annuler ladite première consigne de tenue de facteur de charge lorsque le pilote ne donne pas un ordre de déplacement selon une direction longitudinale, la consigne d'accélération longitudinale étant nulle.

Dans cette configuration, lors des manoeuvres à cabrer par exemple, ou lors des changements de références d'assiettes longitudinales par l'organe de réglage d'assiette, le deuxième système automatique de tenue du facteur de charge agit sur une chaîne de commande pour abaisser le pas collectif des premières pales. La puissance consommée par les hélices reste alors quasi constante, alors que la vitesse longitudinale de l'aéronef diminue à cause de la manoeuvre.

Toujours dans cette configuration, lors des manoeuvres à piquer, le deuxième système automatique de tenue du facteur de charge agit sur une chaîne de commande pour augmenter le pas collectif des premières pales. La puissance consommée par les hélices reste alors quasi constante, alors que la vitesse longitudinale de l'aéronef augmente à cause de la manoeuvre.

Cette configuration présente ainsi l'avantage de gérer la puissance des hélices pendant les phases de manoeuvre.

Selon une deuxième variante du premier mode de réalisation, lorsque le pilote ne donne pas un ordre de déplacement selon la direction longitudinale, le pilote peut choisir de passer dans un mode de tenue de vitesse où la première consigne de facteur de charge est égale au sinus de l'assiette longitudinale courante, la consigne d'accélération longitudinale étant nulle.

Dans ce cas, lors des manoeuvres à cabrer de l'appareil, le deuxième système automatique de tenue du facteur de charge agit sur une chaîne de commande afin d'augmenter le pas collectif des premières pales pour maintenir la vitesse longitudinale de l'aéronef quasi constante.

A l'inverse, lors des manoeuvres à piquer, lorsque le pilote agit sur le manche cyclique le deuxième système automatique de tenue du facteur de charge agit sur une chaîne de commande afin d'abaisser le pas collectif des premières pales pour contrer l'augmentation de vitesse liée à la manoeuvre.

Cette deuxième variante du premier mode de réalisation présente ainsi l'avantage de gérer la vitesse de l'appareil durant les manoeuvres. Elle peut être une alternative à une tenue de vitesse réalisée par le pas collectif des hélices du groupe propulsif.

Dans ce même mode, il est aisé de rajouter une deuxième boucle de régulation sur le pas collectif des premières pales avec le paramètre de vitesse air indiquée IAS pour davantage de robustesse.

Selon une troisième variante, il est avantageux d'utiliser la troisième constante longitudinale comme une consigne d'assiette d'équilibre « idéale » afin de faciliter le pilotage de l'aéronef. Le constructeur détermine ainsi une assiette d'équilibre « $\theta_{equi}$ » qui optimise les performances de l'aéronef dans des phases de vol stabilisées prédéterminées lorsque la consigne d'accélération longitudinale est nulle.

Pour conserver la vitesse de l'aéronef lors de la rejointe d'un point d'équilibre, la troisième constante longitudinale « k » est alors déterminé par la formule suivante :

$$k = -\sin(\theta_{equi})\bullet(a+b),$$

où « • » représente le signe de la multiplication, « a » représente ladite première constante longitudinale, « b » représente ladite deuxième constante longitudinale, « $\theta_{equi}$ » représente une assiette d'équilibre prédéterminée optimisant des performances de l'aéronef dans des phases de vol stabilisées prédéterminées, la consigne d'accélération longitudinale $\gamma_x^*$ étant nulle.

Ainsi, en phase stabilisée l'assiette d'équilibre sera automatiquement gérée et prise comme référence par la stabilisation de base du pilote automatique. Dans cette même phase, la première consigne de tenue de facteur de charge Nx* correspond au terme « $\sin(\theta_{equi})$ » ce qui permet de conserver la vitesse de l'appareil lors de la rejointe du point d'équilibre.

Il est à noter que le dispositif mettant en oeuvre ce procédé peut comprendre un moyen de sélection manoeuvrable par le pilote pour choisir l'application de la première variante, de la deuxième variante ou de la troisième variante.

Eventuellement, les constantes longitudinales sont choisies dans une liste incluant au moins une des combinaisons suivantes :

- une première combinaison longitudinale selon laquelle la première constante longitudinale vaut « 1 », la deuxième constante longitudinale vaut zéro, et la troisième constante longitudinale vaut zéro,

- une deuxième combinaison longitudinale selon laquelle la première constante longitudinale vaut « 0,001 », la deuxième constante longitudinale vaut « 1 », et la troisième constante longitudinale vaut zéro,

- une troisième combinaison longitudinale selon laquelle la première constante longitudinale vaut « 0,9 », la deuxième constante longitudinale vaut « 2 », et la troisième constante longitudinale vaut zéro.

Avantageusement, la première combinaison longitudinale est appliquée à basse vitesse longitudinale soit en dessous de 70 noeuds (kts). Selon cette première combinaison longitudinale, on commande principalement l'aéronef en modifiant l'assiette longitudinale de l'aéronef.

La deuxième combinaison longitudinale est éventuellement appliquée à haute vitesse longitudinale soit au dessus de 150 noeuds. Selon cette deuxième combinaison longitudinale, on commande principalement l'aéronef à l'aide du pas collectif des premières pales des hélices pour optimiser la traînée aérodynamique de l'aéronef.

La troisième combinaison longitudinale est éventuellement appliquée à moyenne vitesse longitudinale soit entre 70 noeuds et 150 noeuds. Selon cette troisième combinaison longitudinale, on commande l'aéronef à l'aide du pas collectif des premières pales des hélices et en modifiant l'assiette longitudinale de l'aéronef.

Selon une deuxième réalisation compatible avec la première réalisation, lorsque l'ordre est un ordre de déplacement selon une direction verticale parallèle à la direction de la pesanteur, on traduit cet ordre de déplacement selon une direction en élévation en une consigne d'accélération verticale, puis on transforme cette consigne d'accélération verticale par des lois de contrôle vertical prédéterminées en une consigne de tenue d'assiette longitudinale transmise à un premier système automatique de tenue d'assiette longitudinale, en une première consigne de tenue de facteur de charge longitudinal transmise à un deuxième système automatique de tenue de facteur de charge contrôlant un pas collectif des premières pales, et en une deuxième consigne de tenue de facteur de charge vertical transmise à un troisième système automatique de tenue de facteur de charge contrôlant une variation du pas collectif des deuxièmes pales de la voilure tournante.

Lors des phases d'équilibre, ou suite à une consigne d'accélération verticale par exemple, cette architecture de commande permet de conserver à la fois une vitesse longitudinale et une vitesse verticale constantes. La phase de montée (ou de descente) s'effectue alors en gardant une incidence aérodynamique constante de l'aéronef. S'il le désire, le pilote peut toujours piloter l'aéronef avec une commande de vol cyclique des deuxièmes pales pour changer ou ajuster son assiette, les lois de contrôle maintenant toujours les mêmes vitesses longitudinale et verticale de la machine.

La consigne de tenue d'assiette longitudinale peut alors être déterminée par la première loi de contrôle vertical suivante :

$$\theta^* = \int q^* dt$$

avec :

$$q^* = (g/u) \cdot [-a'' \cdot (Nz^* + \cos\theta \cdot \cos\varphi) - k''] / (a'' + b'')$$

et

$$Nz^* = (1/(a' \cdot \cos\theta \cdot \cos\varphi + b' \cdot \sin\theta)) \cdot (-a' \cdot (\Gamma z^*/g + 1) - k' \cdot \sin\theta)$$

où « $\theta^*$ » représente la consigne de tenue d'assiette longitudinale exprimée en radians, « $\Gamma z^*$ » représente la consigne d'accélération verticale demandée par le pilote, « $g$ » représente l'accélération de la pesanteur, « $u$ » représente la vitesse longitudinale courante de l'aéronef exprimée en mètre par seconde (m/s), « $\theta$ » représente l'assiette longitudinale courante exprimée en radians, « $\varphi$ » représente l'angle de roulis courant de l'aéronef exprimée en radians, « • » représente le signe de la multiplication, « / » représente le signe de la division, « $a'$ » représente une première constante verticale, « $b'$ » représente une deuxième constante verticale, « $k'$ » représente une troisième constante verticale, « $a''$ » représente une quatrième constante verticale, « $b''$ » représente une cinquième constante verticale, « $k''$ » représente une sixième constante verticale, la consigne de tenue d'assiette longitudinale $\theta^*$ étant gelée lorsque la consigne d'accélération verticale est égale à 1.

Selon un autre aspect, la première consigne de tenue de facteur de charge peut être déterminée par la deuxième loi de contrôle vertical suivante :

$$Nx^* = (1/(a' \cdot \cos\theta \cdot \cos\varphi + b' \cdot \sin\theta)) \cdot (b'(\Gamma z^*/g + 1) - k' \cdot \cos\theta \cdot \cos\varphi)$$

où « $Nx^*$ » représente la première consigne de tenue de facteur de charge exprimée en nombre de « $g$ », « $\Gamma z^*$ » représente la consigne d'accélération verticale demandée par le pilote, « $g$ » représente l'accélération de la pesanteur, « • » représente le signe de la multiplication, « / » représente le signe de la division, « $\theta$ » représente l'assiette longitudinale courante exprimée en radians, « $\varphi$ » représente l'angle de roulis courant de l'aéronef exprimée en radians, « $a'$ » représente une première constante verticale, « $b'$ » représente une deuxième constante verticale, « $k'$ » représente une troisième constante verticale, en l'absence dudit ordre de déplacement selon une direction verticale, ladite première consigne $Nx^*$ étant égale au sinus de l'assiette longitudinale courante $\theta$.

De plus, la deuxième consigne de tenue de facteur de charge peut être déterminée par la troisième loi de contrôle vertical suivante :

$$NZcoll^* = (b'' \cdot (Nz^* + \cos\theta \cdot \cos\varphi) - k'') / (a'' + b'')$$

et

$$Nz^* = (1/(a' \cdot \cos\theta \cdot \cos\varphi + b' \cdot \sin\theta)) \cdot (-a' \cdot (\Gamma z^*/g + 1) - k' \cdot \sin\theta)$$

où « $NZcoll^*$ » représente la deuxième consigne de tenue de facteur de charge exprimée en nombre de « $g$ », « $\Gamma z^*$ » représente la consigne d'accélération verticale, « $g$ » représente l'accélération de la pesanteur , « $\theta$ » représente l'assiette longitudinale courante exprimée en radians, « $\varphi$ » représente l'angle de roulis courant de l'aéronef exprimée en radians, « • » représente le signe de la multiplication, « / » représente le signe de la division, « $a'$ » représente une première constante verticale, « $b'$ » représente une deuxième constante verticale, « $k'$ » représente une troisième constante verticale, « $a''$ » représente une quatrième constante verticale, « $b''$ » représente une cinquième constante verticale, « $k''$ »

représente une sixième constante verticale.

Eventuellement, les constantes verticales sont choisies dans une liste incluant au moins une des combinaisons suivantes :

- une première combinaison verticale selon laquelle la première constante verticale vaut « 1 », la deuxième constante verticale vaut zéro, la troisième constante verticale vaut zéro, la quatrième constante verticale vaut zéro, la cinquième constante verticale vaut « 1 », et la sixième constante verticale vaut zéro,

- une deuxième combinaison verticale selon laquelle la première constante verticale vaut « 1 », la deuxième constante verticale vaut zéro, la troisième constante verticale vaut zéro, la quatrième constante verticale vaut « 0,8 », la cinquième constante verticale vaut « 1 », et la sixième constante verticale vaut zéro,

- une troisième combinaison verticale selon laquelle la première constante verticale vaut « 1 », la deuxième constante verticale vaut zéro, la troisième constante verticale vaut zéro, la quatrième constante verticale vaut « -0,6 », la cinquième constante verticale vaut « 1 », et la sixième constante verticale vaut zéro,

- une quatrième combinaison verticale selon laquelle la première constante verticale vaut « 1 », la deuxième constante verticale vaut « 0,15 », la troisième constante verticale vaut zéro, la quatrième constante verticale vaut « 0,8 », la cinquième constante verticale vaut « 1 », et la sixième constante verticale vaut zéro,

- une cinquième combinaison verticale selon laquelle la première constante verticale vaut « 1 », la deuxième constante verticale vaut « 0,15 », la troisième constante verticale vaut zéro, la quatrième constante verticale vaut « - 0,6 », la cinquième constante verticale vaut « 1 », et la sixième constante verticale vaut zéro,

- une sixième combinaison verticale selon laquelle la première constante verticale vaut « 1 », la deuxième constante verticale vaut « -0,15 », la troisième constante verticale vaut zéro, la quatrième constante verticale vaut « 0,8 », la cinquième constante verticale vaut « 1 », et la sixième constante verticale vaut zéro,

- une septième combinaison verticale selon laquelle la première constante verticale vaut « 1 », la deuxième constante verticale vaut « -0,15 », la troisième constante verticale vaut zéro, la quatrième constante verticale vaut « - 0,6 », la cinquième constante verticale vaut « 1 », et la sixième constante verticale vaut zéro.

Ainsi, la première combinaison verticale permet de commander l'aéronef en pilotant le pas collectif des deuxièmes pales de la voilure tournante, sans changer l'assiette longitudinale de cet aéronef.

La deuxième combinaison verticale permet de commander l'aéronef en pilotant le pas collectif des deuxièmes pales de la voilure tournante, avec une assiette longitudinale à cabrer.

La troisième combinaison verticale permet de commander l'aéronef en pilotant le pas collectif des deuxièmes pales de la voilure tournante, avec une assiette longitudinale à piquer.

La quatrième combinaison verticale permet de commander l'aéronef en pilotant le pas collectif des premières pales des hélices pour accélérer, avec une l'assiette longitudinale à cabrer.

La cinquième combinaison verticale permet de commander l'aéronef en pilotant le pas collectif des premières pales des hélices pour accélérer, avec une l'assiette longitudinale à piquer.

La sixième combinaison verticale permet de commander l'aéronef en pilotant le pas collectif des premières pales des hélices pour décélérer, avec une l'assiette longitudinale à cabrer.

La septième combinaison verticale permet de commander l'aéronef en pilotant le pas collectif des premières pales des hélices pour décélérer, avec une l'assiette longitudinale à piquer.

On comprend que les valeurs des diverses constantes peuvent être ajustées sans sortir du cadre de l'invention.

Un moyen de sélection peut être implémenté pour permettre au pilote de choisir la combinaison souhaitée.

Dans un mode de réalisation préféré, une sélection automatique de ces divers modes de fonctionnement est réalisée pour ajuster les constantes présentes dans lesdites lois prédéterminées en fonction du cas de vol. On peut citer principalement comme paramètres définissant les cas de vol : la vitesse horizontale courante, la vitesse verticale courante, l'altitude courante, la puissance courante, la puissance disponible, l'assiette maximale admissible.

Outre un procédé, l'invention a aussi pour objet un dispositif pour appliquer ce procédé.

L'invention vise ainsi un dispositif de pilotage assisté d'un aéronef muni d'une voilure tournante et d'un groupe propulsif comprenant au moins une hélice propulsive, chaque hélice comprenant une pluralité de premières pales, la voilure tournante comprenant au moins un rotor muni d'une pluralité de deuxièmes pales.

Ce dispositif comporte au moins un moyen de commande pouvant être commandé par un pilote pour fournir un ordre de déplacement selon une direction, ledit dispositif ayant une unité de traitement reliée au moyen de commande, l'unité de traitement exécutant des instructions pour transformer ledit ordre en une consigne d'accélération selon ladite direction, puis pour transformer cette consigne d'accélération par des lois prédéterminées en au moins une consigne de tenue d'assiette longitudinale transmise à un premier système automatique de tenue d'assiette longitudinale contrôlant un pas cyclique longitudinal des deuxièmes pales de la voilure tournante et une première consigne de tenue de facteur de charge dans une direction longitudinale de l'aéronef parallèle à un axe de roulis dudit aéronef transmise à un deuxième système automatique de tenue de facteur de charge contrôlant le pas collectif des premières pales du groupe propulsif.

Par ailleurs, le dispositif peut notamment comporter une ou plusieurs des caractéristiques qui suivent.

Ce dispositif peut ainsi comporter un troisième système automatique de tenue de facteur de charge pour contrôler le pas collectif desdites deuxièmes pales, ladite unité de traitement transmettant une deuxième consigne de tenue de facteur de charge au troisième système automatique de tenue de facteur de charge.

En outre, le dispositif peut comporter un système de détermination de paramètres de vol.

Par exemple, un tel système de détermination de paramètres de vol est du type connu sous l'acronyme ADAHRS, « Air Data Attitude and Heading Reference System » en langue anglaise.

Le système de détermination de paramètres de vol peut par exemple déterminer les paramètres de vol courants de l'aéronef en temps réel, tels que la vitesse longitudinale courante, la vitesse de dérapage courante, la vitesse verticale courante, l'assiette longitudinale courante soit l'angle de tangage de l'aéronef, l'assiette transversale courante soit l'angle de roulis de l'aéronef, l'angle de lacet courant, le facteur de charge longitudinal courant, le facteur de charge de dérapage courant, le facteur de charge en élévation courant.

Le système de détermination de paramètres de vol peut alors fournir la valeur de courante de paramètres de vol exploités dans les lois prédéterminées permettant de transformer la consigne d'accélération établie.

On note que le système de détermination de paramètres de vol peut aussi inclure des moyens pour déterminer d'autres paramètres, tels que la vitesse air indiquée, l'altitude, la puissance consommée, la puissance disponible notamment pour ajuster les constantes présentes dans lesdites lois prédéterminées, pour permettre l'élection automatique d'une combinaison de constantes par exemple.

Le dispositif peut aussi comprendre un moyen de sélection du type décrit précédemment.

Enfin, l'invention vise aussi un aéronef hybride muni d'une voilure tournante comprenant au moins un rotor et un groupe propulsif comprenant au moins une hélice, cet aéronef étant pourvu d'un dispositif selon l'invention.

L'invention et ses avantages apparaîtront avec plus de détails dans le cadre de la description qui suit avec des exemples de réalisation donnés à titre illustratif en référence aux figures annexées qui représentent :

- la figure 1, un schéma présentant un aéronef selon l'invention,

- la figure 2, un schéma explicitant le procédé selon l'invention.

Les éléments présents dans plusieurs figures distinctes sont affectés d'une seule et même référence.

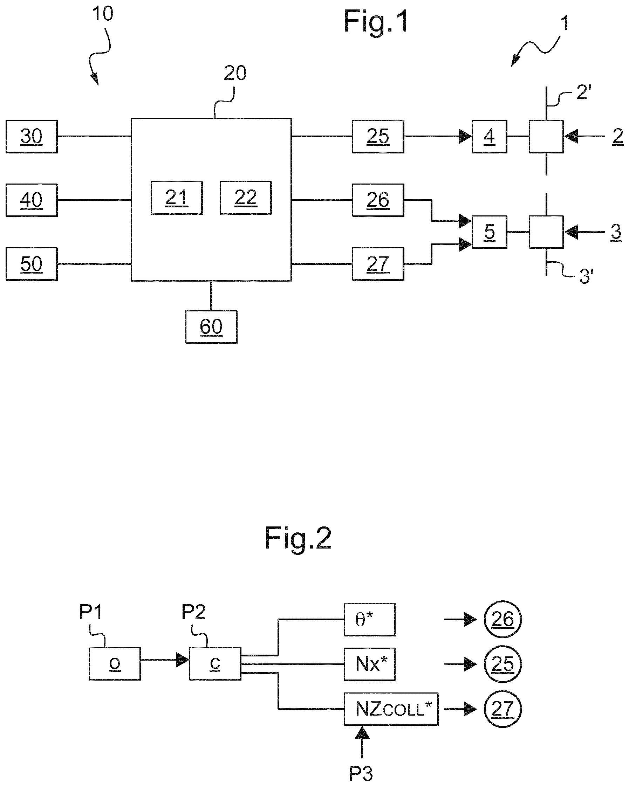

La figure 1 présente un aéronef 1 hybride représenté de manière schématique pour ne pas alourdir inutilement cette figure 1.

L'aéronef 1 comporte un groupe propulsif muni d'au moins une hélice 2 propulsive comprenant une pluralité de premières pales 2', ainsi qu'une voilure tournante comprenant au moins un rotor 3 comprenant une pluralité de deuxièmes pales 3'.

Dès lors, l'aéronef est pourvu d'un premier moyen de réglage 4 du pas des premières pales 2', ce premier moyen de réglage 4 pouvant être un vérin hydraulique apte à modifier le pas collectif des premières pales.

De même, l'aéronef est pourvu d'un deuxième moyen de réglage 5 du pas des deuxièmes pales 3', ce deuxième moyen de réglage 5 pouvant comprendre au moins trois servocommandes pour modifier le pas collectif et le pas cyclique des deuxièmes pales.

En effet, si les servocommandes s'étendent ou se rétractent de la même quantité, le pas collectif des deuxièmes pales 3' est modifié de façon identique. Par contre, si une servocommande se comporte différemment des autres, le pas cyclique des deuxièmes pales 3' est modifié de façon adaptée. On se référera à la littérature si nécessaire pour obtenir des compléments d'informations relatives au pas collectif et au pas cyclique d'un rotor.

L'aéronef 1 est pourvu d'un dispositif 10 de pilotage assisté pour diminuer la charge de travail d'un pilote.

Ce dispositif 10 inclut une unité de traitement 20 reliée à au moins un moyen de commande 30, 40, le pilote manoeuvrant ce moyen de commande pour donner un ordre déplacement O selon une direction.

Par exemple, le dispositif comprend un moyen de commande longitudinale 30 pour requérir un ordre de déplacement O selon une direction longitudinale de l'aéronef à savoir une direction parallèle à l'axe de roulis de l'aéronef, et un moyen de commande verticale 40 pour requérir un ordre de déplacement O selon une direction verticale à savoir parallèlement à la direction de la pesanteur.

Avantageusement, le moyen de commande longitudinal est situé sur la poignée de commande de pas cyclique des deuxièmes pales et le moyen de commande vertical est situé sur la poignée de commande de pas collectif des deuxièmes pales.

L'unité de traitement 20 peut comprendre un organe de calcul 21 et une mémoire 22, l'organe de calcul exécutant des instructions mémorisées dans la mémoire 22 pour appliquer le procédé selon l'invention de manière à fournir des instructions à un premier système automatique de tenue d'assiette longitudinale 26 relié au deuxième moyen de réglage 5 pour contrôler le pas cyclique longitudinale des deuxièmes pales 3', à un deuxième système automatique 25 de tenue de facteur de charge relié au premier moyen de réglage 4 pour contrôler le pas collectif des premières pales 2' et à un troisième système automatique 27 de tenue de facteur de charge relié au deuxième moyen de réglage 5 pour contrôler le pas collectif des deuxièmes pales 3'. Par suite, l'unité de traitement 20 peut être reliée à un système 50 de détermination de paramètres de vol, par exemple du type connu sous l'acronyme ADAHRS, et à un moyen de sélection 60.

La figure 2 explicite le procédé selon l'invention mis en oeuvre par le dispositif 10.

Selon ce procédé, durant une première étape P1, on traduit un ordre O de déplacement selon une direction particulière en une consigne d'accélération C selon cette direction particulière.

Par exemple, les moyens de commande peuvent être du type commande impulsionnelle à trois états -, 0, + visant à réduire ou à augmenter un paramètre.

En l'occurrence, lorsqu'un pilote manoeuvre un moyen de commande, l'unité de traitement en déduit que le pilote requiert une augmentation ou une diminution de l'accélération de l'aéronef selon la direction associée au moyen de commande et par suite en déduit une consigne d'accélération C.

Par exemple, l'unité de traitement 20 intègre le signal provenant du moyen de commande pour en déduire la consigne d'accélération C.

Dès lors, durant une deuxième étape P2, l'unité de traitement transforme cette consigne d'accélération C par des lois prédéterminées en au moins une consigne de tenue d'assiette longitudinale $\theta^*$ transmise à un premier système automatique de tenue d'assiette longitudinale 26 contrôlant le pas cyclique longitudinal de la voilure tournante pour respecter ladite consigne de tenue d'assiette longitudinale et en une première consigne de tenue de facteur de charge $Nx^*$ dans une direction longitudinale de l'aéronef parallèle à un axe de roulis dudit aéronef transmise à un deuxième système automatique 25 de tenue dudit facteur de charge contrôlant le pas collectif des premières pales 2' du groupe propulsif pour respecter ladite première consigne $Nx^*$.

Selon une première réalisation, le pilote manoeuvre le premier moyen de commande longitudinale 30 pour requérir un ordre O de déplacement selon une direction longitudinale de l'aéronef.

L'unité de traitement 20 détermine l'ordre O de déplacement selon une direction longitudinale en une consigne

$$\gamma_X^* = \frac{1}{g}\int O.dt$$

d'accélération longitudinale $\gamma_x^*$ avec la relation suivante :                remise à zéro en l'absence d'ordre O puis écrêtée en amplitude et vitesse de variation et où g représente l'accélération de la pesanteur.

L'unité de traitement 20 transforme alors cette consigne d'accélération longitudinale $\gamma_x^*$ par des lois prédéterminées en une consigne de tenue d'assiette longitudinale $\theta^*$ transmise au premier système automatique de tenue d'assiette longitudinale 26 et en une première consigne $Nx^*$ de tenue de facteur de charge transmise au deuxième système automatique 25 de tenue de facteur de charge contrôlant un pas collectif des premières pales par une régulation de type proportionnelle intégrale dérivée.

Cette consigne de tenue d'assiette longitudinale $\theta^*$ peut être déterminée par la première loi de contrôle longitudinal suivante :

$$\theta^* = (180/\mathrm{Pi})\bullet[(-a)\bullet(\gamma_x^*/g) - k]/(a+b)$$

où « $\theta^*$ » représente la consigne de tenue d'assiette longitudinale exprimée en degrés, « Pi » représente le nombre $\pi$, « $\gamma_x^*$ » représente la consigne d'accélération longitudinale, « g » représente l'accélération de la pesanteur, « • » représente le signe de la multiplication, « / » représente le signe de la division, « a » représente une première constante longitudinale, « b » représente une deuxième constante longitudinale, « k » représente une troisième constante longitudinale.

On comprend que « $\theta^*$ » est exprimé en degrés. Pour une représentation de cette consigne de tenue d'assiette longitudinale en radians, le terme 180/Pi doit être supprimé.

Par ailleurs, la première consigne de tenue de facteur de charge $Nx^*$ peut être déterminée par la deuxième loi de contrôle longitudinal suivante :

$$Nx^* = [b\bullet(\gamma_x^*/g) - k]/(a+b)$$

où « Nx* » représente ladite première consigne de tenue de facteur de charge, « $\gamma_x$* » représente la consigne d'accélération longitudinale, « g » représente l'accélération de la pesanteur, « • » représente le signe de la multiplication, « / » représente le signe de la division, « a » représente une première constante longitudinale, « b » représente une deuxième constante longitudinale, « k » représente une troisième constante longitudinale.

On note que la consigne de tenue d'assiette longitudinale θ* peut être modifiée par incrémentation ou décrémentation à l'aide d'un organe de réglage d'assiette lorsque la consigne d'accélération est nulle.

Par exemple, un premier moyen de commande dénommé « beep d'accélération longitudinal » par commodité permet de déterminer la consigne d'accélération longitudinale.

Dès lors, un organe de commande dénommé « beep de référence d'assiette » par commodité peut être utilisé pour modifier uniquement la consigne de tenue d'assiette longitudinale θ* à tenir par le premier système automatique lorsque la consigne d'accélération est nulle.

Selon une première variante, la troisième constante longitudinale k est égale à zéro pour annuler la première consigne Nx* de tenue de facteur de charge lorsque le pilote ne donne pas un ordre de déplacement selon ladite direction longitudinale, ladite consigne d'accélération longitudinale étant nulle.

Selon une deuxième variante, lorsque le pilote ne donne pas un ordre de déplacement selon la direction longitudinale, la première consigne Nx* de facteur de charge est égale au sinus de l'assiette longitudinale courante θ, la consigne d'accélération longitudinale $\gamma_x$* étant nulle. Dans ce même mode, il est aisé de rajouter une deuxième boucle de régulation sur le pas collectif des premières pales avec le paramètre de vitesse air indiquée IAS pour davantage de robustesse.

Selon une troisième variante, il est avantageux d'utiliser la troisième constante longitudinale « k » comme une consigne d'assiette d'équilibre « idéale » afin de faciliter le pilotage de l'aéronef.

On estime une assiette d'équilibre $\theta_{equi}$ dépendant des principales conditions de vol, cette assiette d'équilibre $\theta_{equi}$ optimisant les performances de l'aéronef dans des phases de vol stabilisée, à savoir lorsque la consigne d'accélération longitudinale est nulle.

Ainsi, l'assiette d'équilibre $\theta_{equi}$ est estimée en fonction de conditions de vol déterminées par exemple à l'aide de la vitesse air indiquée IAS, de l'altitude de l'aéronef, de la puissance consommée par l'aéronef, de la puissance disponible sur l'installation motrice de l'aéronef et de la vitesse verticale de l'aéronef.

La troisième constante longitudinale « k » est alors déterminée à l'aide la formule suivante : $k = - \sin(\theta_{equi}) \cdot (a+b)$.

Ainsi, en phase stabilisée l'assiette à l'équilibre est automatiquement gérée et prise comme référence par la stabilisation de base du pilote automatique. Dans cette même phase, la consigne de tenue de facteur de charge Nx* correspond à « $\sin(\theta_{equi})$ » ce qui permet de conserver la vitesse de l'appareil lors de la rejointe du point d'équilibre.

Par ailleurs, les constantes longitudinales a, b, k sont choisies dans une liste incluant au moins une des combinaisons suivantes :

-   une première combinaison longitudinale selon laquelle la première constante longitudinale vaut « 1 », la deuxième constante longitudinale vaut zéro, et la troisième constante longitudinale vaut zéro,

-   une deuxième combinaison longitudinale selon laquelle la première constante longitudinale vaut « 0,001 », la deuxième constante longitudinale vaut « 1 », et la troisième constante longitudinale vaut zéro,

-   une troisième combinaison longitudinale selon laquelle la première constante longitudinale vaut « 0,9 », la deuxième constante longitudinale vaut « 2 », et la troisième constante longitudinale vaut zéro.

Selon une deuxième réalisation compatible avec la première réalisation, le pilote manoeuvre le deuxième moyen de commande 40 dénommé « beep d'accélération vertical » par commodité pour requérir un ordre $\underline{O}$, cet ordre $\underline{O}$ étant un ordre de déplacement selon une direction verticale parallèle à la direction de la pesanteur.

Selon une version, un pilote peut éventuellement choisir une combinaison longitudinale en manoeuvrant un bouton de sélection. De manière alternative, l'unité de traitement peut déterminer la combinaison longitudinale à appliquer en fonction de la vitesse longitudinale de l'aéronef, déterminée à l'aide du système 50.

L'unité de traitement 20 traduit cet ordre $\underline{O}$ de déplacement selon une direction en élévation en une consigne d'accélération verticale Γz* avec la relation suivante :

$$\Gamma z^* = \frac{1}{g} \int O.dt$$

remise à zéro en l'absence d'ordre pilote puis écrêtée en amplitude et en vitesse de variation et où g représente l'accélération de la pesanteur.

L'unité de traitement 20 transforme alors cette consigne d'accélération verticale Γz* en une consigne de tenue d'assiette longitudinale θ* transmise à un premier système automatique de tenue d'assiette longitudinale 26, en une première consigne Nx* de facteur de charge transmise à un deuxième système automatique 25 de tenue de facteur de charge contrôlant un pas collectif des premières pales par une régulation proportionnelle intégrale dérivée, et en une deuxième consigne NZcoll* de facteur de charge transmise à un troisième système automatique 27 de tenue de facteur de charge contrôlant une variation de pas collectif des deuxièmes pales de la voilure tournante par une régulation proportionnelle intégrale dérivée.

Il est à noter que le premier système automatique de tenue d'assiette longitudinale 26, le deuxième système automatique 25 de tenue de facteur de charge, et le troisième système automatique 27 de tenue de facteur de charge peuvent faire partie d'un même équipement.

Il est encore à noter que la consigne de tenue d'assiette longitudinale est déterminée par la première loi de contrôle vertical suivante :

$$\theta^* = \int q^* dt$$

avec

$$q^* = (g/u) \bullet [-a'' \bullet (Nz^* + \cos\theta \bullet \cos\varphi) - k''] / (a''+b'')$$

et

$$Nz^* = (1/(a' \bullet \cos\theta \bullet \cos\varphi + b' \bullet \sin\theta)) \bullet (-a' \bullet (\Gamma z^*/g + 1) - k' \bullet \sin\theta)$$

où « $\theta^*$ » représente la consigne de tenue d'assiette longitudinale exprimée en radians, « $\Gamma z^*$ » représente la consigne d'accélération verticale, « g » représente l'accélération de la pesanteur, « u » représente la vitesse longitudinale courante de l'aéronef déterminée par le système 50, « $\theta$ » représente l'assiette longitudinale courante déterminée par le système 50, « $\varphi$ » représente l'angle de roulis courant de l'aéronef déterminée par le système 50, « • » représente le signe de la multiplication, « / » représente le signe de la division, « a' » représente une première constante verticale, « b' » représente une deuxième constante verticale, « k' » représente une troisième constante verticale, « a" » représente une quatrième constante verticale, « b" » représente une cinquième constante verticale, « k" » représente une sixième constante verticale, la consigne de tenue d'assiette longitudinale $\theta^*$ étant gelée et donc maintenue constante lorsque la consigne d'accélération verticale est égale à 1.

En outre, la première consigne de facteur de charge est déterminée par la deuxième loi de contrôle vertical suivante :

$$Nx^* = (1/(a' \bullet \cos\theta \bullet \sin\theta + b' \bullet \sin\theta)) \bullet (b'(\Gamma z^*/g + 1) - k' \bullet \cos\theta \bullet \cos\varphi)$$

où « $Nx^*$ » représente la première consigne de tenue de facteur de charge, « $\Gamma z^*$ » représente la consigne d'accélération verticale, « g » représente l'accélération de la pesanteur, « • » représente le signe de la multiplication, « / » représente le signe de la division, « $\theta$ » représente l'assiette longitudinale courante, « $\varphi$ » représente l'angle de roulis courant de l'aéronef, « a' » représente une première constante verticale, « b' » représente une deuxième constante verticale, « k' » représente une troisième constante verticale, « a" » représente une quatrième constante verticale, « b" » représente une cinquième constante verticale, « k" » représente une sixième constante verticale, en l'absence dudit ordre de déplacement selon une direction verticale, ladite première consigne $Nx^*$ étant égale au sinus de l'assiette longitudinale courante ($\theta$).

Enfin, la deuxième consigne de facteur de charge est éventuellement déterminée par la troisième loi de contrôle vertical suivante :

$$NZcoll^* = ( b'' \bullet (Nz^* + \cos\theta \bullet \cos\varphi) - k'') / (a'' + b'')$$

et

$$Nz^* = (1/(a' \bullet \cos\theta \bullet \cos\varphi + b' \bullet \sin\theta)) \bullet (-a' \bullet (\Gamma z^*/g + 1) - k' \bullet \sin\theta)$$

où « $NZcoll^*$ » représente la deuxième consigne de tenue de facteur de charge, « $\Gamma z^*$ » représente la consigne d'accélération verticale, « g » représente l'accélération de la pesanteur, , « θ » représente l'assiette longitudinale courante, « φ » représente l'angle de roulis courant de l'aéronef, « • » représente le signe de la multiplication, « / » représente le signe de la division, « a' » représente une première constante verticale, « b' » représente une deuxième constante verticale, « k' » représente une troisième constante verticale, « a" » représente une quatrième constante verticale, « b" » représente une cinquième constante verticale, « k" » représente une sixième constante verticale

En outre, les constantes verticales peuvent être choisies dans une liste incluant au moins une des combinaisons suivantes :

- une première combinaison verticale selon laquelle la première constante verticale vaut « 1 », la deuxième constante verticale vaut zéro, la troisième constante verticale vaut zéro, la quatrième constante verticale vaut zéro, la cinquième constante verticale vaut « 1 », et la sixième constante verticale vaut zéro,

- une deuxième combinaison verticale selon laquelle la première constante verticale vaut « 1 », la deuxième constante verticale vaut zéro, la troisième constante verticale vaut zéro, la quatrième constante verticale vaut « 0,8 », la cinquième constante verticale vaut « 1 », et la sixième constante verticale vaut zéro,

- une troisième combinaison verticale selon laquelle la première constante verticale vaut « 1 », la deuxième constante verticale vaut zéro, la troisième constante verticale vaut zéro, la quatrième constante verticale vaut « -0,6 », la cinquième constante verticale vaut « 1 », et la sixième constante verticale vaut zéro,

- une quatrième combinaison verticale selon laquelle la première constante verticale vaut « 1 », la deuxième constante verticale vaut « 0,15 », la troisième constante verticale vaut zéro, la quatrième constante verticale vaut « 0,8 », la cinquième constante verticale vaut « 1 », et la sixième constante verticale vaut zéro,

- une cinquième combinaison verticale selon laquelle la première constante verticale vaut « 1 », la deuxième constante verticale vaut « 0,15 », la troisième constante verticale vaut zéro, la quatrième constante verticale vaut « - 0,6 », la cinquième constante verticale vaut « 1 », et la sixième constante verticale vaut zéro,

- une sixième combinaison verticale selon laquelle la première constante verticale vaut « 1 », la deuxième constante verticale vaut « -0,15 », la troisième constante verticale vaut zéro, la quatrième constante verticale vaut « 0,8 », la cinquième constante verticale vaut « 1 », et la sixième constante verticale vaut zéro,

- une septième combinaison verticale selon laquelle la première constante verticale vaut « 1 », la deuxième constante verticale vaut « -0,15 », la troisième constante verticale vaut zéro, la quatrième constante verticale vaut « - 0,6 », la cinquième constante verticale vaut « 1 », et la sixième constante verticale vaut zéro.

Un pilote peut éventuellement choisir une combinaison verticale en manoeuvrant un moyen de sélection 60.

## Revendications

1. Procédé de pilotage assisté d'un aéronef (1) muni d'une voilure tournante et d'un groupe propulsif comprenant au moins une hélice (2) propulsive, chaque hélice (2) comprenant une pluralité de premières pales (2'), la voilure tournante comprenant au moins un rotor (3) muni d'une pluralité de deuxièmes pales (3'),
dans ledit procédé on traduit un ordre (O) d'un pilote de l'aéronef donné pour requérir un déplacement selon une direction longitudinale ou verticale en une consigne d'accélération (C) selon ladite direction, puis on transforme cette consigne d'accélération (C) par des lois prédéterminées en au moins une consigne de tenue d'assiette longitudinale (θ*) transmise à un premier système automatique de tenue d'assiette longitudinale (26) contrôlant un pas cyclique longitudinal des deuxièmes pales de la voilure tournante pour respecter ladite consigne de tenue d'assiette longitudinale (θ*) et en une première consigne de tenue de facteur de charge (Nx*) dans une direction longitudinale de l'aéronef parallèle à un axe de roulis dudit aéronef transmise à un deuxième système automatique (25) de tenue dudit facteur de charge contrôlant un pas collectif des premières pales (2') du groupe propulsif pour respecter ladite première consigne (Nx*),
dans ledit procédé, lorsque ledit ordre (O) est un ordre de déplacement selon une direction verticale parallèle à la direction de la pesanteur, on traduit cet ordre de déplacement selon une direction en élévation en une consigne d'accélération verticale, puis on transforme cette consigne d'accélération verticale en une consigne de tenue d'assiette longitudinale (θ*) transmise à un premier système automatique de tenue d'assiette longitudinale (26), en une première consigne (Nx*) de facteur de charge transmise à un deuxième système automatique (26) de tenue de facteur de charge, et en une deuxième consigne (NZcoll*) de facteur de charge transmise à un troisième système automatique (27) de tenue de facteur de charge contrôlant une variation du pas collectif des deuxièmes pales de la voilure tournante,

ledit procédé étant **caractérisé en ce que** ladite consigne de tenue d'assiette longitudinale est déterminée par la première loi de contrôle vertical suivante :

$$\theta^* = \int q^* dt$$

avec

$$q^* = (g/u) \cdot [-a'' \cdot (Nz^* + \cos\theta \cdot \cos\varphi) - k''] / (a'' + b'')$$

et

$$Nz^* = (1/(a' \cdot \cos\theta \cdot \cos\varphi + b' \cdot \sin\theta)) \cdot (-a' \cdot (\Gamma z^*/g + 1) - k' \cdot \sin\theta)$$

où « $\theta^*$ » représente la consigne de tenue d'assiette longitudinale exprimée en radians, « $\Gamma z^*$ » représente la consigne d'accélération verticale, « g » représente l'accélération de la pesanteur, « u » représente la vitesse longitudinale courante de l'aéronef, « $\theta$ » représente l'assiette longitudinale courante, « $\varphi$ » représente l'angle de roulis courant de l'aéronef, « $\cdot$ » représente le signe de la multiplication, « / » représente le signe de la division, « a' » représente une première constante verticale, « b' » représente une deuxième constante verticale, « k' » représente une troisième constante verticale, « a" » représente une quatrième constante verticale, « b" » représente une cinquième constante verticale, « k" » représente une sixième constante verticale, la consigne de tenue d'assiette longitudinale $\theta^*$ étant gelée lorsque la consigne d'accélération verticale est égale à 1.

2. Procédé selon la revendication 1,
**caractérisé en ce que**, lorsque ledit ordre (O) est un ordre de déplacement selon une direction longitudinale de l'aéronef parallèle à un axe de roulis dudit aéronef, on traduit cet ordre de déplacement selon une direction longitudinale en une consigne d'accélération longitudinale, puis on transforme cette consigne d'accélération longitudinale par des lois prédéterminés uniquement en une consigne de tenue d'assiette longitudinale ($\theta^*$) transmise à un premier système automatique de tenue d'assiette longitudinale (26) et en une première consigne (Nx*) de tenue de facteur de charge.

3. Procédé selon la revendication 2,
**caractérisé en ce que** ladite consigne de tenue d'assiette longitudinale ($\theta^*$) est déterminée par la première loi de contrôle longitudinal suivante :

$$\theta^* = (180/\mathrm{Pi}) \cdot [(-a) \cdot (\gamma_x^*/g) - k]/(a+b)$$

où « $\theta^*$ » représente la consigne de tenue d'assiette longitudinale exprimée en degrés, « Pi » représente le nombre $\pi$, « $\gamma_x^*$ » représente la consigne d'accélération longitudinale, « g » représente l'accélération de la pesanteur, « $\cdot$ » représente le signe de la multiplication, « / » représente le signe de la division, « a » représente une première constante longitudinale, « b » représente une deuxième constante longitudinale, « k » représente une troisième constante longitudinale.

4. Procédé selon l'une quelconque des revendications 2 à 3,
**caractérisé en ce que** lorsque ledit ordre (O) est un ordre de déplacement selon une direction longitudinale de l'aéronef parallèle à un axe de roulis dudit aéronef, ladite première consigne de tenue de facteur de charge (Nx*) est déterminée par la deuxième loi de contrôle longitudinal suivante :

$$Nx^* = [b \cdot (\gamma_x^*/g) - k]/(a+b)$$

où « Nx* » représente ladite première consigne de tenue de facteur de charge, « $\gamma_x^*$ » représente la consigne

d'accélération longitudinale, « g » représente l'accélération de la pesanteur, « • » représente le signe de la multiplication, « / » représente le signe de la division, « a » représente une première constante longitudinale, « b » représente une deuxième constante longitudinale, « k » représente une troisième constante longitudinale.

5. Procédé selon l'une quelconque des revendications 1 à 4,
**caractérisé en ce que** la consigne de tenue d'assiette longitudinale ($\theta^*$) est modifiée par incrémentation ou décrémentation par un organe de réglage d'assiette lorsque la consigne d'accélération est nulle.

6. Procédé selon l'une quelconque des revendications 3 à 4,
**caractérisé en ce que** la troisième constante longitudinale (k) est égale à zéro pour annuler ladite première consigne (Nx*) de tenue de facteur de charge lorsque le pilote ne donne pas un ordre de déplacement selon ladite direction longitudinale, ladite consigne d'accélération longitudinale étant nulle.

7. Procédé selon l'une quelconque des revendications 3 à 4,
**caractérisé en ce que** la troisième constante longitudinale « k » est déterminé par la formule suivante :

$$k = - \sin(\theta_{equi}) \cdot (a+b),$$

où « • » représente le signe de la multiplication, « a » représente ladite première constante longitudinale, « b » représente ladite deuxième constante longitudinale, « $\theta_{equi}$ » représente une assiette d'équilibre prédéterminée optimisant des performances de l'aéronef dans des phases de vol stabilisées prédéterminées, la consigne d'accélération longitudinale ($\gamma_x^*$) étant nulle.

8. Procédé selon l'une quelconque des revendications 2 à 7
**caractérisé en ce que** lorsque le pilote ne donne pas un ordre de déplacement selon la direction longitudinale, la première consigne (Nx*) de facteur de charge est égale au sinus de l'assiette longitudinale courante ($\theta$), la consigne d'accélération longitudinale ($\gamma_x^*$) étant nulle.

9. Procédé selon l'une quelconque des revendications 3 à 4,
**caractérisé en ce que** lesdites constantes longitudinales (a, b, k) sont choisies dans une liste incluant au moins une des combinaisons suivantes :

- une première combinaison longitudinale selon laquelle la première constante longitudinale vaut « 1 », la deuxième constante longitudinale vaut zéro, et la troisième constante longitudinale vaut zéro,
- une deuxième combinaison longitudinale selon laquelle la première constante longitudinale vaut « 0,001 », la deuxième constante longitudinale vaut « 1 », et la troisième constante longitudinale vaut zéro,
- une troisième combinaison longitudinale selon laquelle la première constante longitudinale vaut « 0,9 », la deuxième constante longitudinale vaut « 2 », et la troisième constante longitudinale vaut zéro.

10. Procédé selon l'une quelconque des revendications 1 à 9, **caractérisé en ce que** ladite première consigne de facteur de charge est déterminée par la deuxième loi de contrôle vertical suivante :

$$Nx^* = (1/(a' \cdot \cos\theta \cdot \cos\varphi + b' \cdot \sin\theta)) \cdot (b'(\Gamma z^*/g + 1) - k' \cdot \cos\theta \cdot \cos\varphi)$$

où « Nx* » représente la première consigne de tenue de facteur de charge, « $\Gamma z^*$ » représente la consigne d'accélération verticale , « g » représente l'accélération de la pesanteur, « • » représente le signe de la multiplication, « / » représente le signe de la division, « $\theta$ » représente l'assiette longitudinale courante, « $\varphi$ » représente l'angle de roulis courant de l'aéronef, « a' » représente une première constante verticale, « b' » représente une deuxième constante verticale, « k' » représente une troisième constante verticale, « a'' » représente une quatrième constante verticale, « b'' » représente une cinquième constante verticale, « k'' » représente une sixième constante verticale, en l'absence dudit ordre de déplacement selon une direction verticale, ladite première consigne Nx* étant égale au sinus de l'assiette longitudinale courante ($\theta$).

11. Procédé selon l'une quelconque des revendications 1 à 10,
**caractérisé en ce que** ladite deuxième consigne de facteur de charge est déterminée par la troisième loi de contrôle vertical suivante :

$$NZcoll^* = ( b'' \cdot (Nz^* + \cos\theta \cdot \cos\varphi) - k'') / (a'' + b'')$$

et

$$Nz^* = (1/(a' \cdot \cos\theta \cdot \cos\varphi + b' \cdot \sin\theta)) \cdot (-a' \cdot (\Gamma z^*/g + 1) - k' \cdot \sin\theta)$$

où « NZcoll* » représente la deuxième consigne de tenue de facteur de charge, « $\Gamma z^*$ » représente la consigne d'accélération verticale, « g » représente l'accélération de la pesanteur, , « $\theta$ » représente l'assiette longitudinale courante, « $\varphi$ » représente l'angle de roulis courant de l'aéronef, « $\cdot$ » représente le signe de la multiplication, « / » représente le signe de la division, « a' » représente une première constante verticale, « b' » représente une deuxième constante verticale, « k' » représente une troisième constante verticale, « a" » représente une quatrième constante verticale, « b" » représente une cinquième constante verticale, « k" » représente une sixième constante verticale

**12.** Procédé selon l'une quelconque des revendications 1 à 11,
**caractérisé en ce que** lesdites constantes verticales sont choisies dans une liste incluant au moins une des combinaisons suivantes :

- une première combinaison verticale selon laquelle la première constante verticale vaut « 1 », la deuxième constante verticale vaut zéro, la troisième constante verticale vaut zéro, la quatrième constante verticale vaut zéro, la cinquième constante verticale vaut « 1 », et la sixième constante verticale vaut zéro,
- une deuxième combinaison verticale selon laquelle la première constante verticale vaut « 1 », la deuxième constante verticale vaut zéro, la troisième constante verticale vaut zéro, la quatrième constante verticale vaut « 0,8 », la cinquième constante verticale vaut « 1 », et la sixième constante verticale vaut zéro,
- une troisième combinaison verticale selon laquelle la première constante verticale vaut « 1 », la deuxième constante verticale vaut zéro, la troisième constante verticale vaut zéro, la quatrième constante verticale vaut « -0,6 », la cinquième constante verticale vaut « 1 », et la sixième constante verticale vaut zéro,
- une quatrième combinaison verticale selon laquelle la première constante verticale vaut « 1 », la deuxième constante verticale vaut « 0,15 », la troisième constante verticale vaut zéro, la quatrième constante verticale vaut « 0,8 », la cinquième constante verticale vaut « 1 », et la sixième constante verticale vaut zéro,
- une cinquième combinaison verticale selon laquelle la première constante verticale vaut « 1 », la deuxième constante verticale vaut « 0,15 », la troisième constante verticale vaut zéro, la quatrième constante verticale vaut « - 0,6 », la cinquième constante verticale vaut « 1 », et la sixième constante verticale vaut zéro,
- une sixième combinaison verticale selon laquelle la première constante verticale vaut « 1 », la deuxième constante verticale vaut « -0,15 », la troisième constante verticale vaut zéro, la quatrième constante verticale vaut « 0,8 », la cinquième constante verticale vaut « 1 », et la sixième constante verticale vaut zéro,
- une septième combinaison verticale selon laquelle la première constante verticale vaut « 1 », la deuxième constante verticale vaut « -0,15 », la troisième constante verticale vaut zéro, la quatrième constante verticale vaut « - 0,6 », la cinquième constante verticale vaut « 1 », et la sixième constante verticale vaut zéro.

**13.** Dispositif (10) de pilotage assisté d'un aéronef muni d'une voilure tournante et d'un groupe propulsif comprenant au moins une hélice (2) propulsive, chaque hélice comprenant une pluralité de premières pales (2'), la voilure tournante comprenant au moins un rotor (3) muni d'une pluralité de deuxièmes pales (3')
**caractérisé en ce qu'**il comporte au moins un moyen de commande (30, 40) pouvant être commandé par un pilote pour fournir un ordre de déplacement ($\underline{O}$) selon une direction longitudinale ou verticale, ledit dispositif (10) ayant une unité de traitement (20) reliée au moyen de commande (30, 40), l'unité de traitement (20) exécutant des instructions pour transformer ledit ordre ($\underline{O}$) en une consigne d'accélération ($\underline{C}$) selon ladite direction, puis pour transformer cette consigne d'accélération ($\underline{C}$) par des lois prédéterminées en au moins une consigne de tenue d'assiette longitudinale ($\theta^*$) transmise à un premier système automatique de tenue d'assiette longitudinale (26) contrôlant un pas cyclique longitudinal des deuxièmes pales (3') de la voilure tournante et une première consigne de tenue de facteur de charge (Nx*) dans une direction longitudinale de l'aéronef parallèle à un axe de roulis dudit aéronef transmise à un deuxième système automatique (25) de tenue de facteur de charge contrôlant le pas collectif des premières pales (2') du groupe propulsif, ledit dispositif comportant un troisième système automatique (27) de tenue de facteur de charge pour contrôler le pas collectif desdites deuxièmes pales (3'), ladite unité de traitement (10) transmettant une deuxième consigne tenue de facteur de charge au troisième système automatique (27) de tenue de facteur de charge, ledit dispositif étant configuré pour appliquer le procédé selon l'une quelconque des revendications 1 à 12.

**14.** Dispositif selon la revendication 13.
**caractérisé en ce qu'**il comporte un système (50) de détermination de paramètres de vol.

**15.** Aéronef (1) hybride muni d'une voilure tournante comprenant au moins un rotor (3) et d'un groupe propulsif comprenant au moins une hélice (2),
**caractérisé en ce qu'**il comporte un dispositif (10) selon l'une quelconque des revendications 13 à 14.

**Patentansprüche**

**1.** Verfahren zur computergestützten Steuerung eines Luftfahrzeugs (1) mit einem Drehflügel und einem Antriebsaggregat, welches mindestens einen Antriebspropeller (2) aufweist, wobei jeder Propeller (2) eine Mehrzahl erster Rotorblätter (2') aufweist, wobei der Drehflügel mindestens einen Rotor (3) mit einer Mehrzahl zweiter Rotorblätter (3') aufweist,

wobei bei dem Verfahren ein Befehl (O) eines Piloten des Luftfahrzeugs, der gegeben wird, um eine Bewegung in einer Längsrichtung oder in vertikaler Richtung zu fordern, in einen Sollwert (C) einer Beschleunigung in dieser Richtung übersetzt wird, und dann dieser Beschleunigungssollwert (C) durch vorbestimmte Regeln in mindestens einen Sollwert des Haltens der Längsneigung (θ*) umgewandelt wird, der an ein erstes automatisches System (26) für das Längsneigungsverhalten übertragen wird, welches einen Längsanstellwinkel der zweiten Rotorblätter des Drehflügels steuert, um den Sollwert des Längsneigungsverhaltens (θ*) einzuhalten, und in einen Sollwert des Haltens des Lastfaktors (Nx*) in einer Längsrichtung des Luftfahrzeug, die parallel zu einer Rollachse des Luftfahrzeugs verläuft, der an ein zweites automatisches System (25) für das Halten des Lastfaktors gesendet wird, welches einen Anstellwinkel der ersten Rotorblätter (2') des Antriebsaggregats steuert, um den ersten Sollwert (Nx*) einzuhalten, umgewandelt wird,

wobei bei diesem Verfahren, wenn der Befehl (O) ein Befehl zur Bewegung in einer vertikalen Richtung parallel zu der Richtung der Schwerkraft ist, dieser Befehl zur Bewegung in einer Höhenrichtung in einen Sollwert einer vertikalen Beschleunigung übersetzt wird, und dann dieser Sollwert der vertikalen Beschleunigung in einen Sollwert des Haltens der Längsneigung (θ*) umgewandelt wird, der an ein erstes automatisches System (26) für das Halten der Längsneigung übertragen wird, in einen ersten Sollwert (Nx*) des Lastfaktors umgewandelt wird, der an zweites automatisches System (26) für das Halten des Lastfaktors und in einen zweiten Sollwert (NZcoll*) des Lastfaktors umgewandelt wird, der an ein drittes automatisches System (27) für das Halten des Lastfaktors übertragen wird, welches eine Anstellwinkeländerung der zweiten Rotorblätter des Drehflügels steuert,
**dadurch gekennzeichnet, dass** der Sollwert des Haltens der Längsneigung durch die folgende erste Regel der vertikalen Steuerung bestimmt wird:

$$\theta^* = \int q^* dt$$

mit

$$q^* = (g/u) \cdot [-a'' \cdot (Nz^* + \cos\theta \cdot \cos\varphi) - k''] / (a''+b'')$$

und

$$Nz^* = (1/(a' \cdot \cos\theta \cdot \cos\varphi + b' \cdot \sin\theta)) \cdot (-a' \cdot (\Gamma z^*/g + 1) - k' \cdot \sin\theta) \qquad ,$$

wobei "θ*" den Sollwert des Haltens der Längsneigung, ausgedrückt in Radiant darstellt, " " den Sol Γz*rt der vertikalen Beschleunigung darstellt, "g" die Schwerkraftbeschleunigung darstellt, "u" die aktuelle Geschwindigkeit des Luftfahrzeugs in Längsrichtung darstellt, "θ" die aktuelle Längsneigung darstellt, "φ" den aktuellen Rollwinkel des Luftfahrzeugs darstellt, "•" das Multiplikationszeichen, "/" das Divisionszeichen, "a'" eine erste vertikale Konstante, "b' " eine zweite vertikale Konstante, "k' " eine dritte vertikale Konstante, "a" " eine vierte vertikale Konstante, "b" " eine fünfte vertikale Konstante, "k" " eine sechste vertikale Konstante darstellen, wobei der Sollwert des Haltens der Längsneigung θ* eingefroren ist, wenn der Sollwert der vertikalen Beschleunigung gleich 1 ist.

**2.** Verfahren nach Anspruch 1,
**dadurch gekennzeichnet, dass**, wenn der Befehl (O) ein Befehl zur Bewegung in einer Längsrichtung des Luftfahrzeugs parallel zu einer Rollachse des Luftfahrzeugs ist, dieser Befehl zur Bewegung in einer Längsrichtung in einen Sollwert der Längsbeschleunigung übersetzt wird, und dann dieser Sollwert der Längsbeschleunigung durch vorbestimmte Regeln ausschließlich in einen Sollwert des Haltens der Längsneigung ($\theta$*) umgewandelt wird, der an ein erstes automatisches System (26) für das Halten der Längsneigung übertragen wird, und in einen ersten Sollwert (Nx*) des Haltens des Lastfaktors.

3. Verfahren nach Anspruch 2,
   **dadurch gekennzeichnet, dass** der Sollwert des Haltens der Längsneigung ($\theta$*) durch folgende erste Längssteuerungsregel bestimmt wird:

$$\theta^* = (180/\text{Pi})\bullet[(-a)\bullet(\gamma_x^*/g) - k]/(a+b) \quad,$$

wobei "$\theta$*" den Sollwert des Haltens der Längsneigung ausgedrückt in Grad darstellt, "Pi" die Zahl $\pi$ darstellt, "$\gamma_x$*" den Sollwert der Längsbeschleunigung darstellt, "g" die Schwerkraftbeschleunigung darstellt, "•" das Multiplikationszeichen, "/" das Divisionszeichen, "a" eine erste Längskonstante, "b" eine zweite Längskonstante, "k" ein dritte Längskonstante darstellen.

4. Verfahren nach einem der Ansprüche 2 bis 3,
   **dadurch gekennzeichnet, dass**, wenn der Befehl (O') ein Befehl zur Bewegung in einer Längsrichtung des Luftfahrzeugs, parallel zu einer Rollachse des Luftfahrzeugs, ist, der erste Sollwert des Haltens des Lastfaktors (Nx*) durch die folgende zweite Längssteuerungsregel bestimmt wird:

$$\text{Nx}^* = [b\bullet(\gamma_x^*/g) - k]/(a+b) \quad,$$

wobei "Nx*" den ersten Sollwert des Haltens des Lastfaktors darstellt, "$\gamma_x$*" den Sollwert der Längsbeschleunigung, "g" die Schwerkraftbeschleunigung, "•" das Multiplikationszeichen, "/" das Divisionszeichen, "a" eine erste Längskonstante, "b" eine zweite Längskonstante, "k" eine dritte Längskonstante darstellen.

5. Verfahren nach einem der Ansprüche 1 bis 4,
   **dadurch gekennzeichnet, dass** der Sollwert des Haltens der Längsneigung ($\theta$*) durch schrittweise Erhöhung oder Verminderung durch ein Regelelement der Neigung verändert wird, wenn der Beschleunigungssollwert gleich Null ist.

6. Verfahren nach einem der Ansprüche 3 bis 4,
   **dadurch gekennzeichnet, dass** die dritte Längskonstante (k) gleich Null ist, um den ersten Sollwert (Nx*) des Haltens des Lastfaktors zu annullieren, wenn der Pilot keinen Befehl zur Bewegung in Längsrichtung gibt, wobei der Sollwert der Längsbeschleunigung gleich Null ist.

7. Verfahren nach einem der Ansprüche 3 bis 4,
   **dadurch gekennzeichnet, dass** die dritte Längskonstante "k" durch die folgende Formel bestimmt wird:

$$k = - \sin(\theta_{equi})\bullet(a+b),$$

wobei "•" das Multiplikationszeichen, "a" die erste Längskonstante, "b" die zweite Längskonstante, "$\theta_{equi}$" eine vorbestimmte Gleichgewichtsneigung darstellt, die das Leistungsverhalten des Luftfahrzeugs in vorbestimmten stabilisierten Flugphasen optimiert, wobei der Längsbeschleunigungssollwert "$\gamma_x$*" gleich Null ist.

8. Verfahren nach einem der Ansprüche 2 bis 7,
   **dadurch gekennzeichnet, dass**, wenn der Pilot keinen Befehl zur Bewegung in Längsrichtung gibt, der erste Sollwert (Nx*) des Lastfaktors gleich dem Sinus der aktuellen Längsneigung ($\theta$) ist, wobei der Sollwert ($\gamma_x$*) der Längsbeschleunigung gleich Null ist.

9. Verfahren nach einem der Ansprüche 3 bis 4,
   **dadurch gekennzeichnet, dass** die Längskonstanten (a, b, k) aus einer Liste gewählt werden, die mindestens eine der folgenden Kombinationen umfasst:

- eine erste Längskombination, gemäß der die erste Längskonstante "1" beträgt, die zweite Längskonstante gleich Null ist, und die dritte Längskonstante gleich Null ist,
- eine zweite Längskombination, gemäß der die erste Längskonstante "0,001" beträgt, die zweite Längskonstante "1" beträgt, und die dritte Längskonstante gleich Null ist,
- eine dritte Längskombination, gemäß der die erste Längskonstante "0,9" beträgt, die zweite Längskonstante "2" beträgt, und die dritte Längskonstante gleich Null ist.

**10.** Verfahren nach einem der Ansprüche 1 bis 9,
**dadurch gekennzeichnet, dass** der erste Sollwert des Lastfaktors durch die folgende zweite Regel der vertikalen Steuerung bestimmt wird:

$$Nx^* = (1/(a'\bullet cos\theta\bullet cos\phi + b'\bullet sin\theta)) \bullet (b'(\Gamma z^*/g + 1) - k'\bullet cos\theta\bullet cos\phi) \ ,$$

wobei "Nx*" den ersten Sollwert des Haltens des Lastfaktors darstellt, "Γz*" den Sollwert der vertikalen Beschleunigung darstellt, "g" die Schwerkraftbeschleunigung darstellt, "•" das Multiplikationszeichen, "/" das Divisionszeichen, "θ" die aktuelle Längsneigung darstellt, "φ" den aktuellen Rollwinkel des Luftfahrzeugs darstellt, "a' " eine erste vertikale Konstante, "b' " eine zweite vertikale Konstante, "k' " eine dritte vertikale Konstante, "a" " eine vierte vertikale Konstante, "b" " eine fünfte vertikale Konstante, "k" " eine sechste vertikale Konstante darstellen, wobei beim Fehlen des Befehls zur Bewegung in einer vertikalen Richtung der erste Sollwert Nx* gleich dem Sinus der aktuellen Längsneigung (θ) ist.

**11.** Verfahren nach einem der Ansprüche 1 bis 10,
**dadurch gekennzeichnet, dass** der zweite Sollwert des Lastfaktors durch die folgende dritte Regel der vertikalen Steuerung bestimmt wird:

$$NZcoll^* = ( \ b''\bullet (Nz^* + cos\theta\bullet cos\phi) - k'') / (a''+ b'') \ ,$$

und

$$Nz^* = (1/(a'\bullet cos\theta\bullet cos\phi + b'\bullet sin\theta)) \bullet (-a'\bullet (\Gamma z^*/g + 1) - k'\bullet sin\theta) ,$$

wobei "NZcoll*" den zweiten Sollwert des Haltens des Lastfaktors darstellt, , "Γz*" den Sollwert der vertikalen Beschleunigung, "g" die Schwerkraftbeschleunigung, "θ" die aktuelle Längsneigung, "φ" den aktuellen Rollwinkel des Luftfahrzeugs, "•" das Multiplikationszeichen, "/" das Divisionszeichen, "a' " eine erste vertikale Konstante, "b' " eine zweite vertikale Konstante, "k' " eine dritte vertikale Konstante, "a" " eine vierte vertikale Konstante, "b" " eine fünfte vertikale Konstante, "k" " eine sechste vertikale Konstante darstellen.

**12.** Verfahren nach einem der Ansprüche 1 bis 11,
**dadurch gekennzeichnet, dass** die vertikalen Konstanten aus einer Liste ausgewählt sind, die mindestens eine der folgenden Kombinationen umfasst:

- eine erste vertikale Kombination, gemäß der die erste vertikale Konstante "1" beträgt, die zweite vertikale Konstante gleich Null ist, die dritte vertikale Konstante gleich Null ist, die vierte vertikale Konstante gleich Null ist, die fünfte vertikale Konstante "1" beträgt, und die sechste vertikale Konstante gleich Null ist,
- eine zweite vertikale Kombination, gemäß der die erste vertikale Konstante "1" beträgt, die zweite vertikale Konstante gleich Null ist, die dritte vertikale Konstante gleich Null ist, die vierte vertikale Konstante "0,8" beträgt, die fünfte vertikale Konstante "1" beträgt, und die sechste vertikale Konstante gleich Null ist,
- eine dritte vertikale Kombination, gemäß der die erste vertikale Konstante "1" beträgt, die zweite vertikale Konstante gleich Null ist, die dritte vertikale Konstante gleich Null ist, die vierte vertikale Konstante "-0,6" beträgt, die fünfte vertikale Konstante "1" beträgt, und die sechste vertikale Konstante gleich Null ist,
- eine vierte vertikale Kombination, gemäß der die erste vertikale Konstante "1" beträgt, die zweite vertikale Konstante "0,15" beträgt, die dritte vertikale Konstante gleich Null ist, die vierte vertikale Konstante "0,8" beträgt, die fünfte vertikale Konstante "1" beträgt, und die sechste vertikale Konstante gleich Null ist,
- eine fünfte vertikale Kombination, gemäß der die erste vertikale Konstante "1" beträgt, die zweite vertikale Konstante "0,15" beträgt, die dritte vertikale Konstante gleich Null ist, die vierte vertikale Konstante "-0,6" beträgt, die fünfte vertikale Konstante " 1" beträgt, und die sechste vertikale Konstante gleich Null ist,
- eine sechste vertikale Kombination, gemäß der die erste vertikale Konstante "1" beträgt, die zweite vertikale Konstante "-0,15" beträgt, die dritte vertikale Konstante gleich Null ist, die vierte vertikale Konstante "0,8" beträgt, die fünfte vertikale Konstante "1" beträgt, und die sechste vertikale Konstante gleich Null ist,
- eine siebte vertikale Kombination, gemäß der die erste vertikale Konstante "1" beträgt, die zweite vertikale Konstante "-0,15" beträgt, die dritte vertikale Konstante gleich Null ist, die vierte vertikale Konstante "-0,6" beträgt, die fünfte vertikale Konstante " 1" ist, und die sechste vertikale Konstante gleich Null ist.

**13.** Vorrichtung (10) zur computergestützten Steuerung eines Luftfahrzeugs mit einem Drehflügel und einem Antriebsaggregat, welches mindestens einen Antriebspropeller (2) aufweist, wobei jeder Propeller eine Mehrzahl erster Rotorblätter (2') aufweist, wobei der Drehflügel mindestens einen Rotor (3) mit einer Mehrzahl zweiter Rotorblätter (3') aufweist,
**dadurch gekennzeichnet, dass** die Vorrichtung mindestens ein Steuerungsmittel (30, 40) aufweist, das von einem Piloten betätigt werden kann, um einen Befehl (O) zur Bewegung in einer Längsrichtung oder in vertikaler Richtung zu liefern, wobei die Vorrichtung (10) eine Verarbeitungseinheit (20) aufweist, die mit dem Steuerungsmittel (30, 40) verbunden ist, wobei die Verarbeitungseinheit (20) Anweisungen ausführt, um den Befehl (O) in einen Sollwert (C) der Beschleunigung gemäß der Richtung umzuwandeln, und um diesen Beschleunigungssollwert (C) durch die vorbestimmten Regeln in mindestens einen Sollwert des Haltens der Längsneigung ($\theta^*$) umzuwandeln, der von einem ersten automatischen System für das Halten der Längsneigung (26) übertragen wird, welches einen Längsanstellwinkel der zweiten Rotorblätter (3') des Drehflügels steuert, und einen ersten Sollwert des Haltens des Lastfaktors (Nx*) in einer Längsrichtung des Luftfahrzeugs, die parallel zu einer Rollachse des Luftfahrzeugs verläuft, welcher an ein zweites automatisches System (25) für das Halten des Lastfaktors übertragen wird, welches den Anstellwinkel der ersten Rotorblätter (2') des Antriebsaggregats steuert, wobei die Vorrichtung ein drittes automatisches System (27) für das Halten des Lastfaktors aufweist, um den Anstellwinkel der zweiten Rotorblätter (3') zu steuern, wobei die Verarbeitungseinheit (10) einen zweiten Sollwert des Haltens des Lastfaktors an das dritte automatische System (27) für das Halten des Lastfaktors überträgt, wobei die Vorrichtung ausgebildet ist, um das Verfahren nach einem der Ansprüche 1 bis 12 auszuführen.

**14.** Vorrichtung nach Anspruch 13,
**dadurch gekennzeichnet, dass** die Vorrichtung ein System (50) zur Bestimmung von Flugparametern aufweist.

**15.** Hybridluftfahrzeug (1) mit einem Drehflügel, welches mindestens einen Rotor (3) und ein Antriebsaggregat mit mindestens einem Propeller (2) aufweist,
**dadurch gekennzeichnet, dass** es eine Vorrichtung (10) nach einem der Ansprüche 13 bis 14 aufweist.

**Claims**

**1.** Method for assisted piloting of an aircraft (1) equipped with a rotary wing and with a propulsion unit comprising at least one propulsion propeller (2), each propeller (2) comprising a plurality of first blades (2'), the rotary wing comprising at least one rotor (3) equipped with a plurality of second blades (3'),
in said method an order (O) from a pilot of the aircraft that is given to request a movement in a longitudinal or vertical direction is translated into an acceleration setpoint (C) for acceleration in said direction, then this acceleration setpoint (C) is transformed by predetermined rules into at least one setpoint for maintaining longitudinal attitude ($\theta^*$) which is transmitted to a first automatic system for maintaining longitudinal attitude (26) that controls a longitudinal cyclic pitch of the second blades of the rotary wing in order to comply with said setpoint for maintaining longitudinal attitude ($\theta^*$) and into a first setpoint for maintaining load factor (Nx*) in a longitudinal direction of the aircraft, parallel to a roll axis of said aircraft, which is transmitted to a second automatic system (25) for maintaining said load factor that controls a collective pitch of the first blades (2') of the propulsion unit in order to comply with said first setpoint (Nx*), in said method, when said order (O) is an order to move in a vertical direction parallel to the direction of gravity, this order to move in an elevation direction is translated into a vertical acceleration setpoint, then this vertical acceleration setpoint is transformed into a setpoint for maintaining longitudinal attitude ($\theta^*$) which is transmitted to a first automatic system for maintaining longitudinal attitude (26), into a first load factor setpoint (Nx*) which is transmitted to a second automatic system (26) for maintaining load factor, and into a second load factor setpoint (NZcoll*) which is transmitted to a third automatic system (27) for maintaining load factor that controls a change in the collective pitch of the second blades of the rotary wing,
said method being **characterized in that** said setpoint for maintaining longitudinal attitude is determined by the following first vertical control rule:

$$\theta* = \int q* dt$$

with

$$q* = (g/u) \cdot [-a'' \cdot (Nz* + \cos\theta \cdot \cos\varphi) - k''] / (a''+b'')$$

and

$$Nz* = (1/(a' \cdot \cos\theta \cdot \cos\varphi + b' \cdot \sin\theta)) \cdot (-a' \cdot (\Gamma z*/g + 1) - k' \cdot \sin\theta)$$

where "θ*" represents the setpoint for maintaining longitudinal attitude expressed in radians, "Γz*" represents the vertical acceleration setpoint, "g" represents the acceleration due to gravity, "u" represents the current longitudinal speed of the aircraft, "θ" represents the current longitudinal attitude, "φ" represents the current roll angle of the aircraft, "•" represents the multiplication sign, "/" represents the division sign, "a'" represents a first vertical constant, "b'" represents a second vertical constant, "k'" represents a third vertical constant, "a''" represents a fourth vertical constant, "b''" represents a fifth vertical constant, "k''" represents a sixth vertical constant, the setpoint for maintaining longitudinal attitude θ* being frozen when the vertical acceleration setpoint is equal to 1.

2. Method according to claim 1,
   **characterized in that**, when said order (O) is an order to move in a longitudinal direction of the aircraft parallel to a roll axis of said aircraft, this order to move in a longitudinal direction is translated into a longitudinal acceleration setpoint, then this longitudinal acceleration setpoint is transformed by predetermined rules solely into a setpoint for maintaining longitudinal attitude (θ*) which is transmitted to a first automatic system for maintaining longitudinal attitude (26) and into a first setpoint (Nx*) for maintaining load factor.

3. Method according to claim 2,
   **characterized in that** said setpoint for maintaining longitudinal attitude (θ*) is determined by the following first longitudinal control rule:

$$\theta* = (180/Pi) \cdot [(-a) \cdot (\gamma_x*/g) - k] / (a+b)$$

where "θ*" represents the setpoint for maintaining longitudinal attitude expressed in degrees, "Pi" represents the number π, "$\gamma_x$*" represents the longitudinal acceleration setpoint, "g" represents the acceleration due to gravity, "•" represents the multiplication sign, "/" represents the division sign, "a" represents a first longitudinal constant, "b" represents a second longitudinal constant, "k" represents a third longitudinal constant.

4. Method according to any one of claims 2 to 3,
   **characterized in that**, when said order (O) is an order to move in a longitudinal direction of the aircraft parallel to a roll axis of said aircraft, said first setpoint for maintaining load factor (Nx*) is determined by the following second longitudinal control rule:

$$Nx* = [b \cdot (\gamma_x*/g) - k] / (a+b)$$

where "Nx*" represents said first setpoint for maintaining load factor, "$\gamma_x$*" represents the longitudinal acceleration setpoint, "g" represents the acceleration due to gravity, "•" represents the multiplication sign, "/" represents the division sign, "a" represents a first longitudinal constant, "b" represents a second longitudinal constant, "k" represents a third longitudinal constant.

5. Method according to any one of claims 1 to 4,
   **characterized in that** the setpoint for maintaining longitudinal attitude (θ*) is modified by incrementation or decrementation by an attitude adjustment member when the acceleration setpoint is zero.

6.  Method according to any one of claims 3 to 4, **characterized in that** the third longitudinal constant (k) is equal to zero in order to cancel said first setpoint (Nx*) for maintaining load factor when the pilot does not give an order to move in said longitudinal direction, said longitudinal acceleration setpoint being zero.

7.  Method according to any one of claims 3 to 4, **characterized in that** the third longitudinal constant "k" is determined by the following formula:

$$\texttt{k = -sin}(\theta_{\texttt{equi}})\texttt{•(a+b)}$$

where "•" represents the multiplication sign, "a" represents said first longitudinal constant, "b" represents said second longitudinal constant, "$\theta_{equi}$" represents a predetermined equilibrium attitude which optimizes the performance of the aircraft in predetermined stabilized flight phases, the longitudinal acceleration setpoint ($\gamma_x$*) being zero.

8.  Method according to any one of claims 2 to 7, **characterized in that**, when the pilot does not give an order to move in the longitudinal direction, the first load factor setpoint (Nx*) is equal to the sine of the current longitudinal attitude ($\theta$), the longitudinal acceleration setpoint ($\gamma_x$*) being zero.

9.  Method according to any one of claims 3 to 4, **characterized in that** said longitudinal constants (a, b, k) are selected from a list that includes at least one of the following combinations:

    - a first longitudinal combination in which the first longitudinal constant is "1", the second longitudinal constant is zero, and the third longitudinal constant is zero,
    - a second longitudinal combination in which the first longitudinal constant is "0.001", the second longitudinal constant is "1", and the third longitudinal constant is zero,
    - a third longitudinal combination in which the first longitudinal constant is "0.9", the second longitudinal constant is "2", and the third longitudinal constant is zero,

10. Method according to any one of claims 1 to 9, **characterized in that** said first load factor setpoint is determined by the following second vertical control rule:

$$\texttt{Nx* = (1/(a'•cos}\theta\texttt{•cos}\varphi \texttt{ + b'•sin}\theta\texttt{)) • (b'(}\Gamma\texttt{z*/g + 1) -}$$
$$\texttt{k'•cos}\theta\texttt{•cos}\varphi\texttt{)}$$

where "Nx*" represents the first setpoint for maintaining load factor, "$\Gamma$z*" represents the vertical acceleration setpoint, "g" represents the acceleration due to gravity, "•" represents the multiplication sign, "/" represents the division sign, "$\theta$" represents the current longitudinal attitude, "$\varphi$" represents the current roll angle of the aircraft, "a'" represents a first vertical constant, "b'" represents a second vertical constant, "k'" represents a third vertical constant, "a''" represents a fourth vertical constant, "b''" represents a fifth vertical constant, "k''" represents a sixth vertical constant, said first setpoint Nx* being equal to the sine of the current longitudinal attitude ($\theta$) in the absence of said order to move in a vertical direction.

11. Method according to any one of claims 1 to 10, **characterized in that** said second load factor setpoint is determined by the following third vertical control rule:

$$\texttt{NZcoll* = (b''•(Nz* + cos}\theta\texttt{•cos}\varphi\texttt{) - k'') / (a''+b'')}$$

and

$$\texttt{Nz* = (1/(a'•cos}\theta\texttt{•cos}\varphi \texttt{ + b'•sin}\theta\texttt{)) • (-a'•(}\Gamma\texttt{z*/g + 1) -}$$
$$\texttt{k'•sin}\theta\texttt{)}$$

where "NZcoll*" represents the second setpoint for maintaining load factor, "$\Gamma$z*" represents the vertical acceleration setpoint, "g" represents the acceleration due to gravity, "$\theta$" represents the current longitudinal attitude, "$\varphi$" represents the current roll angle of the aircraft, "•" represents the multiplication sign, "/" represents the division sign, "a'" represents a first vertical constant, "b'" represents a second vertical constant, "k'" represents a third vertical constant, "a''" represents a fourth vertical constant, "b''" represents a fifth vertical constant, "k''" represents a sixth vertical constant.

12. Method according to any one of claims 1 to 11, **characterized in that** said vertical constants are selected from a list that includes at least one of the following combinations:

- a first vertical combination in which the first vertical constant is "1", the second vertical constant is zero, the third vertical constant is zero, the fourth vertical constant is zero, the fifth vertical constant is "1", and the sixth vertical constant is zero,
- a second vertical combination in which the first vertical constant is "1", the second vertical constant is zero, the third vertical constant is zero, the fourth vertical constant is "0.8", the fifth vertical constant is "1", and the sixth vertical constant is zero,
- a third vertical combination in which the first vertical constant is "1", the second vertical constant is zero, the third vertical constant is zero, the fourth vertical constant is "-0.6", the fifth vertical constant is "1", and the sixth vertical constant is zero,
- a fourth vertical combination in which the first vertical constant is "1", the second vertical constant is "0.15", the third vertical constant is zero, the fourth vertical constant is "0.8", the fifth vertical constant is "1", and the sixth vertical constant is zero,
- a fifth vertical combination in which the first vertical constant is "1", the second vertical constant is "0.15", the third vertical constant is zero, the fourth vertical constant is "-0.6", the fifth vertical constant is "1", and the sixth vertical constant is zero,
- a sixth vertical combination in which the first vertical constant is "1", the second vertical constant is "-0.15", the third vertical constant is zero, the fourth vertical constant is "0.8", the fifth vertical constant is "1", and the sixth vertical constant is zero,
- a seventh vertical combination in which the first vertical constant is "1", the second vertical constant is "-0.15", the third vertical constant is zero, the fourth vertical constant is "-0.6", the fifth vertical constant is "1", and the sixth vertical constant is zero.

13. Device (10) for assisted piloting of an aircraft equipped with a rotary wing and with a propulsion unit comprising at least one propulsion propeller (2), each propeller comprising a plurality of first blades (2'), the rotary wing comprising at least one rotor (3) equipped with a plurality of second blades (3'),
**characterized in that** it comprises at least one control means (30, 40) which can be controlled by a pilot in order to deliver a movement order (O) to move in a longitudinal or vertical direction, said device (10) having a processing unit (20) connected to the control means (30, 40), the processing unit (20) executing instructions to transform said order (O) into an acceleration setpoint (C) for acceleration in said direction, and then to transform this acceleration setpoint (C) by predetermined rules into at least one setpoint for maintaining longitudinal attitude ($\theta^*$) which is transmitted to a first automatic system for maintaining longitudinal attitude (26) that controls a longitudinal cyclic pitch of the second blades (3') of the rotary wing and into a first setpoint for maintaining load factor (Nx*) in a longitudinal direction of the aircraft, parallel to a roll axis of said aircraft, which is transmitted to a second automatic system (25) for maintaining load factor that controls the collective pitch of the first blades (2') of the propulsion unit, said device comprising a third automatic system (27) for maintaining load factor to control the collective pitch of said second blades (3'), said processing unit (10) transmitting a second setpoint for maintaining load factor to the third automatic system (27) for maintaining load factor, said device being configured to apply the method according to any one of claims 1 to 12.

14. Device according to claim 13,
**characterized in that** it comprises a system (50) for determining flight parameters.

15. Hybrid aircraft (1) equipped with a rotary wing comprising at least one rotor (3) and with a propulsion unit comprising at least one propeller (2),
**characterized in that** it comprises a device (10) according to any one of claims 13 to 14.

# Fig.1

10

20

1

| | | |
|---|---|---|
| 30 | 20 | 25 → 4 — 2' / 2 |
| 40 | 21 22 | 26 → 5 — 3 / 3' |
| 50 | | 27 |
| | 60 | |

# Fig.2

P1  P2

| | | | |
|---|---|---|---|
| o → c | | θ* | → (26) |
| | | Nx* | → (25) |
| | | NZ_COLL* | → (27) |

P3

**EP 3 242 181 B1**

## RÉFÉRENCES CITÉES DANS LA DESCRIPTION

**Documents brevets cités dans la description**

*   US 20080237392 A